# EUROPÄISCHE PATENTSCHRIFT

(11) **EP 1 200 299 B1**
(45) Veröffentlichungstag und Bekanntmachung des Hinweises auf die Patenterteilung: **22.02.2006**
(21) Anmeldenummer: 01944960.2
(22) Anmeldetag: 30.05.2001
(51) Int. Cl.: B62B 3/12, B62B 3/14

(54) **TRANSPORTWAGEN ZUM BEFÖRDERN VON GEPÄCK**
BAGGAGE TRANSPORT CART
CHARIOT POUR LE TRANSPORT DE BAGAGES

(30) Priorität: 09.06.2000 DE 20010208 U
(43) Veröffentlichungstag der Anmeldung: 02.05.2002
(73) Patentinhaber: WANZL METALLWARENFABRIK GMBH, 89336 Leipheim (DE)
(72) Erfinder: HEINISCH, Klaus, 86513 Ursberg (DE)
(86) Internationale Anmeldenummer: PCT/DE2001/002054
(87) Internationale Veröffentlichungsnummer: WO 2001/094182

(56) Entgegenhaltungen:
- EP-A- 0 520 964
- EP-A- 0 693 412
- DE-A- 3 431 402
- DE-A- 19 841 013
- DE-U- 29 919 764

## Beschreibung

Die Erfindung betrifft einen Transportwagen zum Befördern von Gepäck, mit einem Fahrgestell, das eine nach vorne ansteigende Ladefläche aufweist und hinten zwei Räder und vorne eine Lenkrolle trägt, ferner mit einer Schiebeeinrichtung, die vom Fahrgestell aus nach oben gerichtet ist, einen Korb trägt und eine Anlage für abzustellendes Gepäck bildet, wobei die Ladefläche einen Rahmen aufweist und innerhalb dieses Rahmens ein Stützrahmen vorgesehen ist. Derartige Transportwägen werden von der EP 0 520 964 A2 und von der DE 3 431 402 A1 gezeigt.

Transportwagen dieser Art fmden auf Bahnhöfen und Flughäfen Verwendung. Sie werden dort den Reisenden zum Transport ihres Gepäcks zur Verfügung gestellt.

Es ist Aufgabe der Erfindung, einen Transportwagen der hier vorliegenden Art so zu vereinfachen, dass dadurch eine Reduzierung der Herstellkosten erzielbar ist.

Die Lösung der Aufgabe besteht darin, dass der Stützrahmen nur einen Teil der Ladefläche bildet und mit seinem vorderen Bereich unterhalb des Rahmens weitergeführt ist und dass der Stützrahmen mit dem vorderen Bereich die Lenkrolle trägt.

Durch das Nachuntenziehen des vorderen Bereiches des Stützrahmens brauchen keine aufwändigen Verbindungsmittel mehr zwischen der Lenkrolle und dem Stützrahmen oder der Lenkrolle und dem Rahmen, wie sonst üblich, verwendet werden. Durch diese Maßnahme lassen sich die Herstellkosten des Transportwagens reduzieren.

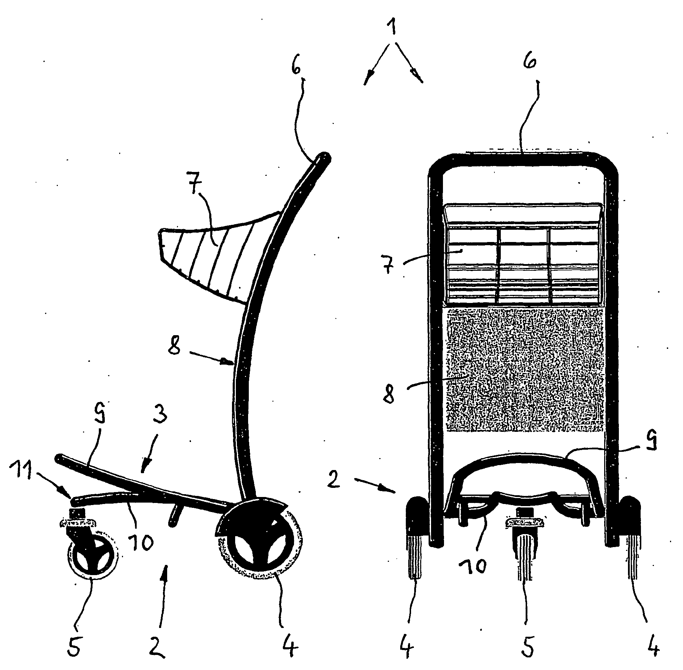

Die Erfindung wird anhand der Zeichnung und unter Hinweis auf die Positionszahlen kurz beschrieben, wobei der Transportwagen links in Seitenansicht und rechts in Vorderansicht dargestellt ist.
**1** Der Transportwagen 1 ist zum Befördern von Gepäck bestimmt. Sein Einsatzgebiet sind bevorzugt Flughäfen und Bahnhöfe. Der Transportwagen 1 lässt sich in bekannter Weise mit gleichen Transportwagen 1 platzsparend in einer Reihe stapeln.
**2** Der Transportwagen 1 weist ein Fahrgestell 2 auf, das hinten mit zwei Rädern 4 und vorne mit einer Lenkrolle 5 ausgestattet ist.
**3** Es ist am Fahrgestell 2 eine nach vorne ansteigende Ladefläche 3 vorgesehen.
**4** Die Räder 4 sind nicht schwenkbar angeordnet.
**5** Die Lenkrolle 5 ist um eine vertikale Achse schwenkbar.
**6** Vom rückwärtigen Ende des Fahrgestelles 2 erstreckt sich eine Schiebeeinrichtung 6 nach oben.
**7** Die Schiebeeinrichtung 6 trägt einen nach vorne sich erstreckenden Korb 7 zur Aufnahme von kleinem Handgepäck.
**8** Die Schiebeeinrichtung 6 bildet eine Anlage 8 für das auf der Ladefläche 3 abzustellende Gepäck.
**9** Die Ladefläche 3 weist einen Rahmen 9 auf, der im unteren Bereich der Schiebeeinrichtung 6 an dieser angeschweißt ist. Der Rahmen 9 bildet eine Umrandung der Ladefläche 3. Der Rahmen 9 steigt wie die Ladefläche 3 nach vorne an. Der Rahmen 9 ist vorne nicht abgestützt.
**10** Innerhalb des Rahmens 9 ist ein Stützrahmen 10 vorgesehen, der ebenfalls im hinteren Bereich der Schiebeeinrichtung 6 befestigt ist. Der Stützrahmen 10 bildet nur einen Teil der Ladefläche 3 und zwar in deren hinterem Bereich. In diesem Bereich ist der Stützrahmen 10 aus Stabilitätsgründen auch mit dem Rahmen 9 verbunden.
**11** Der vordere Bereich 11 des Stützrahmens 10 ist unterhalb des Rahmens 9 nach vorne weitergeführt. Der Stützrahmen 10 trägt mit seinem vorderen Bereich 11 die Lenkrolle 5. Der vordere Bereich 11 kann horizontal weitergeführt sein. Er kann auch, je nach Raddurchmesser der Lenkrolle 5 nach vorne abfallend angeordnet sein.

## Patentansprüche

1. Transportwagen (1) zum Befördern von Gepäck, mit einem Fahrgestell (2), das eine nach vorne ansteigende Ladefläche (3) aufweist und hinten zwei Räder (4) und vorne eine Lenkrolle (5) trägt, ferner mit einer Schiebeeinrichtung (6), die vom Fahrgestell (2) aus nach oben gerichtet ist, einen Korb (7) trägt und eine Anlage (8) für abzustellendes Gepäck bildet, wobei die Ladefläche (3) einen Rahmen (9) aufweist und innerhalb des Rahmens (9) ein Stützrahmen (10) vorgesehen ist, **dadurch gekennzeichnet, dass** der Stützrahmen (10) nur einen Teil der Ladefläche (3) bildet und mit seinem vorderen Bereich (11) unterhalb des Rahmens (9) weitergeführt ist und dass der Stützrahmen (10) mit dem vorderen Bereich (11) die Lenkrolle (5) trägt.

2. Transportwagen nach Anspruch 1, **dadurch gekennzeichnet, dass** der vordere Bereich (11) des Stützrahmens (10) in horizontaler Richtung weitergeführt ist.

3. Transportwagen nach Anspruch 1, **dadurch gekennzeichnet, dass** der vordere Bereich (11) des Stützrahmens (10) nach vorne abfallend angeordnet ist.

## Claims

1. A trolley (1) for transporting luggage, comprising a wheel frame (2) which has a loading surface (3) rising towards the front and which carries two wheels (4) at the rear and a caster (5) at the front, and comprising a pushing means (6) which extends upwards from the wheel frame (2), carries a basket (7) and forms a rest (8) for luggage to be deposited, wherein the loading surface (3) has a frame (9), and a supporting frame (10) is provided within the frame (9), **characterised in that** the supporting frame (10) only forms part of the loading surface (3) and, in its front region (11), continues underneath the frame (9), and **in that** the front region (11) of the supporting frame (10) carries the caster (5).

2. A trolley according to claim 1, **characterised in that** the front region (11) of the supporting frame (10) continues in a horizontal direction.

3. A trolley according to claim 1, **characterised in that** the front region (11) of the supporting frame (10) is arranged so as to slope down towards the front.

## Revendications

1. Chariot de transport (1) destiné à convoyer des bagages, comprenant un châssis de roulement (2) qui comporte une surface de chargement (3) à pente ascendante vers l'avant, et porte deux roues (4) à l'arrière et une roulette directrice (5) à l'avant ; et, en outre, un dispositif de poussée (6) qui est dirigé vers le haut à partir du châssis de roulement (2), porte un panier (7) et matérialise un appui (8) affecté à des bagages devant être déposés, la surface de chargement (3) présentant un cadre (9), et un cadre d'appui (10) étant prévu à l'intérieur dudit cadre (9), **caractérisé par le fait que** le cadre d'appui (10) matérialise uniquement une partie de la surface de chargement (3) et est prolongé, par sa région antérieure (11), au-dessous du cadre (9) ; et **par le fait que** ledit cadre d'appui (10) porte la roulette directrice (5) par la région antérieure (11).

2. Chariot de transport selon la revendication 1, **caractérisé par le fait que** la région antérieure (11) du cadre d'appui (10) est prolongée dans le sens horizontal.

3. Chariot de transport selon la revendication 1, **caractérisé par le fait que** la région antérieure (11) du cadre d'appui (10) est agencée avec pente descendante vers l'avant.
